# FASCICULE DE BREVET EUROPEEN

(11) **EP 0 894 774 B1**
(45) Date de publication et mention de la délivrance du brevet: **06.03.2002**
(21) Numéro de dépôt: 98401851.5
(22) Date de dépôt: 21.07.1998
(51) Int. Cl.: C03C 17/36

(54) **Substrat en verre revêtu d'un empilement de couches minces à propriétés de réflexion dans l'infrarouge et/ou dans le domaine du rayonnement solaire**
Transparentes Substrat mit einer Häufung von Schichten mit Infrarot und / oder Sonnenstrahlung reflektierenden Eigenschaften
Glass substrate with a multi-layered coating having reflective characteristics the infrared region and/or in the region of solar radiation

(30) Priorité: 31.07.1997 DE 19732978
(43) Date de publication de la demande: 03.02.1999
(73) Titulaire: SAINT-GOBAIN GLASS FRANCE, 92400 Courbevoie (FR)
(72) Inventeur: Schicht, Heinz, 06925 Bethau (DE); Schmidt, Uwe, 04895 Falkenberg/Elster (DE); Kaiser, Wilfried, 04860 Torgau (DE); Hryniw, Bodo, 04860 Torgau (DE)
(74) Mandataire: Muller, René

(56) Documents cités:
- EP-A- 0 279 550
- EP-A- 0 308 578
- EP-A- 0 464 789
- EP-A- 0 543 077
- EP-A- 0 738 694
- EP-A- 0 789 005

## Description

La présente invention concerne un substrat transparent muni d'un empilement de couches minces comprenant au moins une couche métallique à propriétés de réflexion dans l'infrarouge sous laquelle est disposée un premier revêtement anti-reflets à base d'un ou plusieurs oxyde(s) métallique(s), une couche métallique de protection supérieure elle-même surmontée d'un deuxième revêtement anti-reflets supérieur.

Il est connu que les substrats munis d'un empilement de couches comprenant de l'argent comme couche fonctionnelle peuvent être relativement sensibles aux sollicitations chimiques. Pour la protection de la couche d'argent contre l'attaque par l'oxygène, les couches d'argent sont donc, en règle générale, protégées par une couche de protection métallique appliquée par-dessus qui présente une plus grande affinité pour l'oxygène. En outre, le revêtement anti-reflets suivant présente une importance essentielle dans le domaine de la capacité de résistance chimique et mécanique de l'empilement de couches. On connaît différentes propositions pour une structure en plusieurs couches du revêtement anti-reflets afin d'améliorer la capacité de résistance chimique et mécanique de tels empilements.

Un empilement de couches de ce genre à haute capacité de résistance mécanique et chimique est connu d'après le document EP-0 593 883 B1. Dans cet empilement de couches connu, un revêtement à trois couches non métallique est appliquée sur la couche de protection métallique et, dans ce revêtement, la couche non métallique contiguë à la couche de protection métallique contient le métal de cette couche de protection métallique non pas comme constituant essentiel de sa combinaison chimique. Le revêtement non métallique consiste, en l'occurrence, de préférence, en des couches alternatives d'oxyde de zinc et d'oxyde de titane qui sont appliquées suivant le procédé de pulvérisation cathodique réactive. Il est, en la circonstance, admis qu'il se forme à chacune des interfaces une couche de titanate de zinc du domaine subnanométrique grâce à laquelle l'effet protecteur de la couche de protection métallique est renforcé. Dans ce cas, une dernière couche non métallique, qui consiste, en particulier, en oxyde de titane est, de préférence, appliquée par-dessus le revêtement non métallique.

La fabrication d'un tel empilement de couches comprenant des couches d'oxyde de titane est relativement onéreuse du fait que les couches d'oxyde de titane ne peuvent être produites qu'à une allure de pulvérisation relativement faible. De surcroît, pour l'application d'un total de quatre couches supplémentaires sur la couche de protection métallique dans une installation de revêtement à défilement continu, il faut au moins quatre postes cathodiques supplémentaires qui ne sont pas toujours présents dans les installations de revêtement existantes.

L'invention a pour but de proposer un substrat muni d'un empilement de couches minces du type précité dont la fabrication soit plus simple, notamment sans que cela nuise à sa capacité de résistance physique et chimique.

Le substrat conforme à l'invention est caractérisé en ce que la couche de protection métallique consiste en un alliage Ti, Zr ou Hf avec Al, Pd ou Pt ou en un alliage AlSi et en ce que le deuxième revêtement anti-reflets supérieur comprend au moins deux couches d'oxyde métallique dont une est à base de ZnO avec 0,1 à 10% en poids d'au moins l'un des éléments B, Si, Ga, Sn, Al, Co, Mg, Mn, Fe, Ni et/ou Cr et l'autre est à base de SnO₂ ou en Bi₂O₃ et une dernière couche à base d'oxyde dur.

Grâce à la structure conforme à l'invention du revêtement supérieur, non seulement on obtient un empilement ayant une capacité de résistance chimique étonnamment bonne, mais de plus on ne met en oeuvre pour cet empilement que des cibles en métaux et alliages qui sont peu onéreux à produire et qui peuvent être pulvérisés aisément et avec de grands débits de pulvérisation.

La haute stabilité chimique de l'empilement de couches conforme à l'invention peut vraisemblablement être expliquée par le fait que les matériaux de couches spéciaux de la couche de protection métallique et des couches d'oxyde métallique sont choisis les uns en fonction des autres du point de vue cinétique et thermodynamique de façon qu'il se forme à chacune des interfaces de minces couches intermédiaires d'oxyde mixte à structure de spinelle dont il est connu que ce sont des structures à empilement cubique le plus dense de sphères qui ne sont pénétrées que très difficilement par les ions entrant par diffusion et qui constituent dès lors des couches d'arrêt particulièrement efficaces.

En outre, il semble être d'une importance essentielle que les matériaux de couche choisis conformément à l'invention se mouillent lors de la pulvérisation de façon optimale au niveau de leurs interfaces, c'est-à-dire de façon particulièrement régulière et dense en d'autres termes croissent en couches cohérentes sans formation d'îlots et adhèrent bien les uns aux autres. Apparemment, un rôle essentiel est, en l'occurrence, joué par le fait que les diverses liaisons ioniques partielles des oxydes contigus les uns aux autres sont du même ordre de grandeur avec les matériaux des couches conformes à l'invention. A l'évidence, la mouillabilité est optimale lorsque la différence des liaisons ioniques partielles des divers oxydes est très petite ou, dans le cas idéal, est nulle. Lorsque de surcroît, comme dans la structure conforme à l'invention, il existe aussi des conditions thermodynamiques particulièrement favorables, les couches d'arrêt denses souhaitées à structure de spinelle se forment de façon spécialement aisée.

En outre, cet effet important pour le succès de l'invention est à l'évidence encore renforcé par le fait que la matrice d'oxyde proprement dite contient des additifs de dopage qui peuvent former de surcroît, aux limites de phase et à l'intérieur des couches, des oxydes mixtes du spinelle, comme par exemple, des spinelles des types ZnAl₂O₄, Zn₂TiO₄, TiZn₂O₄, Zn₂SnO₄, SnZn₂O₄, Co₂SnO₄, SnCo₂O₄, TiFe₂O₄, CoAl₂O₄, FeAl₂O₄ et/ou MnAl₂O₄.

Il est déjà décrit dans le document DD 216 839 que le titane présente une haute capacité de réaction de former aux interfaces des phases intermétalliques ou phases mixtes, ce qui y a été observé à l'interface Al/Ti.

Dans une forme de réalisation avantageuse de l'invention, la couche d'oxyde métallique contiguë à la couche de protection métallique est à base de SnO₂ et l'autre couche d'oxyde métallique est à base d'oxyde de zinc dopé avec Al et Si. Dans ce cas, la couche d'oxyde de zinc dopé est, de préférence, déposée par pulvérisation réactive à partir d'une cible de zinc métallique à laquelle sont alliés 0,3 à 10% en poids de Al et 0,01 à 1% en poids de Si.

Des couches à base de TiO₂ et de Al₂O₃ et en particulier à base de ZrO₂ ou de SiO₂ se sont révélées particulièrement utiles comme dernière couche pour l'empilement de couches conforme à l'invention, tandis que la couche de protection métallique consiste en particulier en TiPd qui est formé par pulvérisation à partir d'une cible de titane allié avec 0,1 à 0,3% en poids de Pd.

L'invention est illustrée ci-après à l'aide d'un exemple comparatif et d'un exemple selon l'invention.

### Exemple comparatif.

Comme exemple comparatif, on prépare un empilement de couches ayant la structure décrite dans le document EP-0 593 883 B1. Cette structure en couches a également été développée du point de vue d'une haute résistance mécanique aux conditions ambiantes et au rayage et doit empêcher même pendant une longue durée une altération chimique de la couche d'argent et de la couche de protection métallique appliquée par-dessus.

L'empilement de couches qui a été appliqué suivant le procédé de la pulvérisation cathodique réactive sur des vitrages en verre flotté présentait la séquence suivante :

Verre-SnO₂-ZnO-Ag-Ti-ZnO-SnO₂-ZnO-TiO₂

Le tableau 1 ci-dessous indique en nm les épaisseurs des couches correspondantes :

**TABLEAU 1**

| **Verre** | **Epaisseurs (nm)** |
|---|---|
| SnO₂ | 20 |
| ZnO | 17 |
| Ag | 11 |
| Ti | 3 |
| ZnO | 10 |
| SnO₂ | 17 |
| ZnO | 10 |
| TiO₂ | 3 |

Des échantillons munis de cet empilement de couches ont été soumis aux tests suivants :
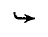 A) test dit "Plattenmethode nack Kimmel et al.", Z. Glastechnische Berichte 59 (1986) pages 252 et suivantes. Le comportement de lixiviation d'Ag* de la couche est déterminé suivant cette méthode;
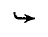 B) test de l'eau de condensation, suivant lequel les éprouvettes sont exposées à une température de 60°C dans une humidité relative de l'air de 100%;
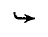 C) test de lavage suivant ASTMD 2486;
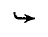 D) test de variations climatiques suivant DIN 52344;
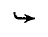 E) test de pulvérisation de sel suivant DIN 50021, et
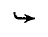 F) test à l'acide chlorhydrique suivant lequel l'éprouvette de verre est immergée pendant 8 minutes dans du HCl 0,01 n à 38°C et la perte d'émissivité est déterminée en %.

Les tests ont donné avec cet empilement de couches de comparaison les résultats suivants qui indiquent pour chacun des tests B, D et E le temps et pour le test C le nombre de passes après lesquelles les premiers défauts visibles de la couche sont apparus.

| Test | A | B | C | D | E | F |
|---|---|---|---|---|---|---|
| Résultat | 0,08 mg/l | 192 h | 1000 passes | 15 h | 24 h | 20% |

Dans l'ensemble, les résultats des essais montrent qu'avec cet empilement de couches un degré élevé de capacité de résistance mécanique et chimique est atteint. La perte d'émissivité déterminée par le test à l'acide chlorhydrique, de même que le test de variations climatiques et les résultats de la méthode des plaques (selon Kimmel) montrent cependant qu'une attaque corrosive de l'empilement de couches se produit avec certains réactifs.

### Exemple selon l'invention.

Suivant le même procédé de pulvérisation cathodique réactive, on a muni des vitrages en verre flotté avec la séquence suivante :

Verre-SnO₂-ZnO:Al:Si-Ag-TiPd-SnO₂-ZnO:Al:Si-ZrO₂

Le tableau 2 ci-dessous indique en nm les épaisseurs des couches correspondantes :

**TABLEAU 2**

| **Verre** | **Epaisseurs (nm)** |
|---|---|
| SnO₂ | 20 |
| ZnO :Al :Si | 17 |
| Ag | 11 |
| TiPd | 2 |
| SnO₂ | 28 |
| ZnO :Al :Si | 8 |
| ZrO₂ | 8 |

Les couches à base de ZnO:Al:Si ont été, en l'occurrence, pulvérisées à partir de cibles de zinc contenant 2% en poids de Al et 0,06% en poids de Si. La couche de protection métallique de TiPd a été pulvérisée à partir d'une cible de titane allié avec 0,2% en poids de Pd. L'application de la dernière couche de ZrO₂ a été faite dans un mode opératoire réactif avec une cathode dite DMS (cathode de pulvérisation à magnétron double) à une vitesse de défilement du vitrage à revêtir de 6,22 m/min.

Des échantillons munis de cet empilement de couches ont été soumis aux mêmes tests que ceux de l'exemple comparatif. Avec cet empilement de couches conforme à l'invention, les tests ont donné les résultats suivants:

| Test | A | B | C | D | E | F |
|---|---|---|---|---|---|---|
| Résultat | 0 mg/l | 300 h | 1600 passes | 24 h | 32 h | 0% |

Les résultats montrent que dans tous les tests pour l'empilement de couches conforme à l'invention on obtient des résultats nettement meilleurs qu'avec les échantillons de l'empilement de couches selon l'invention.

## Revendications

1. Substrat transparent muni d'un empilement de couches minces comprenant au moins une couche métallique à propriétés de réflexion dans l'infrarouge sous laquelle est disposé un premier revêtement anti-reflets à base d'un ou plusieurs oxyde(s) métallique(s), une couche métallique de protection supérieure **caractérisée en ce que** la couche métallique de protection consiste en un alliage Ti, Zr ou Hf avec Al, Pt ou Pd ou en un alliage AlSi, ***caractérisé en ce que*** le deuxième revêtement antireflet supérieur comprend au moins deux couches d'oxyde metallique dont une est à base de ZnO avec 0,1 à 10% en poids d'au moins un des éléments B, Si, Ga, Sm, Al, Co, Mg, Mn, Fe, Ni et/ou Cr et l'autre est à base de SnO₂ ou Bi203 et une dernière couche à base d'oxyde dur.

2. Substrat selon la revendication 1, ***caractérisé en ce que*** la couche de protection métallique est déposée par pulvérisation cathodique à partir d'une cible de titane métallique allié avec 0,1 à 0,3% en poids de Pd.

3. Substrat suivant la revendication 1 ou 2, ***caractérisé en ce que*** la couche d'oxyde métallique contiguë à la couche de protection métallique est à base de SnO₂.

4. Substrat suivant l'une quelconque des revendications 1 à 3, ***caractérisé en ce que*** la couche d'oxyde métallique contiguë à la couche de protection métallique a une épaisseur comprise entre 20 et 30 nm.

5. Substrat suivant l'une quelconque des revendications 1 à 4, ***caractérisé en ce que*** la couche d'oxyde métallique supérieure comprend un oxyde mixte de ZnAlSi.

6. Substrat suivant la revendication 5, ***caractérisé en ce que*** la couche d'oxyde mixte de ZnAlSi est déposée par pulvérisation réactive à partir d'une cible de zinc métallique auquel sont alliés 0,3 à 10% en poids de Al et 0,01 à 1% de Si.

7. Substrat suivant l'une quelconque des revendications 1 à 6, ***caractérisé en ce que*** la dernière couche à base d'oxyde dur comprend du TiO₂, SiO₂, Al₂O₃ ou ZrO₂.

8. Substrat suivant une ou plusieurs des revendications 1 à 7, ***caractérisé en ce que*** le revêtement anti-reflets sous la couche à propriétés de réflexion dans l'infrarouge comprend une couche à base de SnO₂ et une couche contiguë à la couche à propriétés de réflexion dans l'infrarouge à base de ZnO dopé avec Al et Si.

9. Substrat suivant une des revendications 1 à 8, ***caractérisé en ce que*** l'empilement est le suivant :
Verre/SnO₂/ZnO:Al:Si/Ag/TiPd/SnO₂/ZnO:Al:Si/ZrO₂.

10. Substrat selon l'une quelconque des revendications 1 à 9, ***caractérisé en ce que*** la couche à propriétés de réflexion dans l'infrarouge est à base d'argent Ag.

11. Vitrage bas-émissif ou anti-solaire incorporant un substrat selon l'une quelconque des revendications 1 à 10.

## Claims

1. Transparent substrate provided with a stack of films comprising at least one metal film having reflection properties in the infrared and below which is placed a first anti-reflection coating based on one or more metal oxides, an upper, protective metal film, **characterized in that** the protective metal film is of an alloy Ti, Zr or Hf. with Al, Pt or Pd or an AlSi alloy, **characterized in that** the second, upper anti-reflection coating comprises at least two metal oxide films, whereof one is based on ZnO with 0.1 to 10 wt.% of at least one of the elements B, Si, Ga, Sm, Al, Co, Mg, Mn, Fe, Ni and/or Cr and the other is based on SnO₂ or Bi₂O₃ and a final hard oxide-based film.

2. Substrate according to claim 1, **characterized in that** the protective metal film is deposited by cathodic sputtering from a metallic titanium target alloyed with 0.1 to 0.3 wt.% Pd.

3. Substrate according to claim 1 or 2, **characterized in that** the metal oxide film contiguous with the protective metal film is based on SnO₂.

4. Substrate according to any one of the claims 1 to 3, **characterized in that** the metal oxide film contiguous with the protective metal film has a thickness between 20 and 30 nm.

5. Substrate according to any one of the claims 1 to 4, **characterized in that** the upper, metal oxide film comprises a mixed ZnAlSi oxide.

6. Substrate according to claim 5, **characterized in that** the mixed ZnAlSi oxide film is deposited by reactive sputtering from a metallic zinc target with which are alloyed 0.3 to 10 wt.% Al and 0.01 to 1 wt.% Si.

7. Substrate according to any one of the claims 1 to 6, **characterized in that** the final, hard oxide-based film comprises TiO₂, SiO₂, Al₂O₃ or ZrO₂.

8. Substrate according to one or more of the claims 1 to 7, **characterized in that** the anti-reflection coating beneath the film with infrared reflection properties comprises a film based on SnO₂ and a film contiguous to the film having infrared reflection properties based on ZnO doped with Al and Si.

9. Substrate according to any one of the claims 1 to 8, **characterized in that** the stack is as follows:
Glass/SnO₂/ZnO:Al:Si/Ag/TiPd/SnO₂/ZnO:Al:Si/ZrO₂.

10. Substrate according to any one of the claims 1 to 9, **characterized in that** the film with infrared reflection properties is based on silver Ag.

11. Low-emissive or sun-shielding glazing incorporating a substrate according to any one of the claims 1 to 10.

## Patentansprüche

1. Transparentes Substrat mit einem Dünnschicht-System, das mindestens eine metallische Schicht mit Reflexionseigenschaften im Infrarotbereich umfasst, unter der eine erste Entspiegelungsbeschichtung aus einem oder mehreren Metalloxiden angeordnet ist, sowie eine obere metallische Schutzschicht umfasst, **dadurch gekennzeichnet, dass** die metallische Schutzschicht aus einer Legierung von Ti, Zr oder Hf mit Al, Pt oder Pd oder aus einer AlSi-Legierung besteht und **dadurch gekennzeichnet, dass** die zweite, obere Entspiegelungsschicht mindestens zwei metalloxidische Teilschichten umfasst, deren eine Teilschicht auf ZnO-Basis mit insgesamt 0,1 bis 10 Gew.-% wenigstens eines der Elemente B, Si, Ga, Sn, Al, Co, Mg, Mn, Fe, Ni und/oder Cr dotiert ist, und deren andere Teilschicht aus SnO₂ oder Bi₂O₃ besteht, und weiter eine harte oxidische Deckschicht umfasst.

2. Substrat nach Anspruch 1, **dadurch gekennzeichnet, dass** die metallische Schutzschicht durch Kathodenzerstäubung aus einem metallischen Titantarget hergestellt ist, dem 0,1 bis 0,3 Gew.-% Pd zulegiert sind.

3. Substrat nach Anspruch 1 oder 2, **dadurch gekennzeichnet, dass** die der metallischen Schutzschicht benachbarte metalloxidische Teilschicht aus SnO₂ besteht.

4. Substrat nach einem der Ansprüche 1 bis 3, **dadurch gekennzeichnet, dass** die der metallischen Schutzschicht benachbarte metalloxidische Teilschicht 20 bis 30 nm dick ist.

5. Substrat nach einem der Ansprüche 1 bis 4, **dadurch gekennzeichnet, dass** die obere metalloxidische Teilschicht aus einem ZnAlSi-Mischoxid besteht.

6. Substrat nach Anspruch 5, **dadurch gekennzeichnet, dass** die ZnAlSi-Mischoxid-Teilschicht reaktiv aus einem metallischen Zink-Target gesputtert ist, dem 0,3 bis 10 Gew.-% Al und 0,01 bis 1 Gew.-% Si zulegiert sind.

7. Substrat nach einem der Ansprüche 1 bis 6, **dadurch gekennzeichnet, dass** die harte oxidische Deckschicht aus TiO₂, SiO₂, Al₂O₃ oder ZrO₂ besteht.

8. Substrat nach einem oder mehreren der Ansprüche 1 bis 7, **dadurch gekennzeichnet, dass** die unter der Infrarot reflektierenden Schicht angeordnete EntspiegelungsSchicht aus einer unteren Teilschicht aus SnO₂ und einer an die Infrarot reflektierende Schicht angrenzenden Teilschicht aus mit Al und Si dotiertem ZnO besteht.

9. Substrat nach einem oder mehreren der Ansprüche 1 bis 8, **gekennzeichnet durch** folgende Schichtenfolge : Glas / SnO₂ / ZnO:Al:Si / Ag / TiPd / SnO₂ / ZnO:Al:Si / ZrO₂.

10. Substrat nach einem der Ansprüche 1 bis 9, **dadurch gekennzeichnet, dass** die Infrarot reflektierende Schicht aus Silber besteht.

11. Niederemittierende oder Sonnenschutz-Fensterscheibe umfassend ein Substrat nach einem der Ansprüche 1 bis 10.
